# EUROPÄISCHE PATENTSCHRIFT

(11) **EP 1 819 412 B1**
(45) Veröffentlichungstag und Bekanntmachung des Hinweises auf die Patenterteilung: **22.02.2012**
(21) Anmeldenummer: 05816097.9
(22) Anmeldetag: 09.11.2005
(51) Int. Cl.: B01D 35/30, B01D 27/08, F02M 37/22

(54) **FILTER, INSBESONDERE ZUR FILTERUNG VON KRAFTSTOFF**
FILTER, IN PARTICULAR FOR FILTERING FUEL
FILTRE, NOTAMMENT POUR FILTRER DU CARBURANT

(30) Priorität: 22.11.2004 DE 102004056366
(43) Veröffentlichungstag der Anmeldung: 22.08.2007
(73) Patentinhaber: MANN + HUMMEL GMBH, 71638 Ludwigsburg (DE)
(72) Erfinder: AMESÖDER, Dieter, 74321 Bietigheim-Bissingen (DE); SCHRECKENBERGER, Dieter, 71672 Marbach (DE)
(74) Vertreter: Seyboth, Matthias
(86) Internationale Anmeldenummer: PCT/EP2005/055855
(87) Internationale Veröffentlichungsnummer: WO 2006/056533

(56) Entgegenhaltungen:
- WO-A-00/59602
- DE-A1- 10 138 073
- FR-A- 1 477 891
- US-A1- 2003 057 146
- PATENT ABSTRACTS OF JAPAN Bd. 2000, Nr. 17, 5. Juni 2001 (2001-06-05) & JP 08 192007 A (PALL CORP), 30. Juli 1996 (1996-07-30)

## Beschreibung

### Technisches Gebiet

Die Erfindung betrifft einen Filter, insbesondere zur Filterung von Kraftstoff, mit den Merkmalen des Oberbegriffes von Anspruch 1.

### Stand der Technik

Ein gattungsgemäßer Filter ist beispielsweise aus JP 08-192007 A bekannt. Des Weiteren ist aus der US 2003/0057146 A1 ein Filter mit einem in einem Gehäuse angeordneten Filterelement bekannt. Das Filterelement ist zylinderförmig ausgebildet und endseitig mittels zweier beabstandeter Endscheiben abgeschlossen. Eine der beiden Endscheiben ist von einem elektrisch nicht leitenden Gehäusedeckel aus Kunststoff gebildet, wobei das Filterelement in den die Endscheibe bildenden Kunststoff-Gehäusedeckel eingebettet ist. Die der von dem Gehäusedeckel gebildeten Endscheibe gegenüberliegende Endscheibe ist aus Metall ausgebildet. Zwischen der Endscheibe aus Metall und dem Gehäuse ist ein elektrisch leitendes Federelement angeordnet, welches die metallische Endscheibe elektrisch leitend mit einem stirnseitig an dem elektrisch nicht leitenden Gehäuse angeordneten elektrischen Kontaktstift verbindet. Der elektrische Kontaktstift dient zur Ableitung von Ladung von dem Filterelement über die metallische Endscheibe und das elektrisch leitende Federelement. Die Montage des bekannten Filters ist aufgrund des komplizierten Einbaus des Federelements äußerst aufwändig. Ferner sind bei dem bekannten Filter viele Metallteile verarbeitet, so dass die Herstellung des bekannten Filters vergleichsweise kostenintensiv ist.

Aus der DE 101 38 073 A1 ist ein Filter mit einem Filterelement bekannt, wobei das Filterelement in einem metallischen Gehäuse angeordnet ist. Das Filterelement ist mit zwei beabstandeten Endscheiben aus elektrisch leitendem Kunststoff versehen, wobei eine Endscheibe an einem metallischen Gehäusedeckel anliegt. Durch diese elektrisch leitende Verbindung wird elektrische Ladung von dem Filterelement über den metallischen Gehäusedeckel abgeführt. Nachteilig bei dem bekannten Filter ist das relativ hohe Gewicht, aufgrund der Ausbildung des Gehäuses aus Metall.

### Offenbarung der Erfindung

### Technische Aufgabe

Der Erfindung liegt die Aufgabe zugrunde, einen möglichst einfach zu montierenden und aus möglichst wenigen Bauteilen bestehenden Filter vorzuschlagen, mit dem es möglich ist, elektrische Ladung von dem Filterelement abzuführen.

### Technische Lösung

Diese Aufgabe wird mit den Merkmalen des Anspruches 1 gelöst. Vorteilhafte Ausgestaltungen der Erfindung sind in den Unteransprüchen angegeben.

Der Erfindung liegt der Gedanke zugrunde, die einstückig mit einem Gehäuseabschnitt ausgebildete Endscheibe elektrisch leitend auszubilden, damit über diese einstückig mit einem Gehäusebauteil ausgebildete Endscheibe elektrische Ladung von dem Filterelement, insbesondere einem Papier- und/oder Vlieselement, abgeführt werden kann. Der Ladungsabtransport wird durch die leitende Ausbildung der Endscheibe aus Kunststoff sichergestellt. Die Ausbildung der Endscheibe aus Kunststoff hat zudem noch eine Gewichtsreduzierung zur Folge. Damit die Ladung von der Endscheibe abtransportiert werden kann, ist ein elektrischer Kontakt vorgesehen. Dieser elektrische Kontakt ist elektrisch leitend, entweder mit der Batterie, der Fahrzeugkarosserie oder einem mit der Fahrzeugkarosserie verbundenen Bauteil verbunden. Durch die einstückige Ausbildung zumindest einer Endscheibe mit einem Gehäuseabschnitt kann auf eine separate Endscheibe verzichtet werden, wodurch sich die Anzahl der benötigten Bauteile reduziert. Die Anzahl der benötigten Bauteile wird weiterhin dadurch reduziert, dass aufgrund der elektrisch leitenden Ausbildung der einstückig mit einem Gehäusebauteil ausgebildeten Endscheibe auf spezielle Kontaktierungsmittel wie Metallfedern verzichtet werden kann. Durch die Ausbildung der als Gehäusebauteil ausgebildeten Endscheibe aus elektrisch leitendem Kunststoff ist es möglich, das Filterelement, beispielsweise durch Anschmelzen der Endscheibe, in die Endscheibe einzubetten. Hierdurch wird die statische Ladung von dem Filterelement unmittelbar an die Endscheibe abgegeben und von dort über den elektrischen Kontakt abgeleitet. Es ist denkbar, als elektrischen Kontakt eine Befestigungsschraube zur Fixierung des Filters zu verwenden.

Gemäß der Erfindung wird der elektrische Kontakt von einem funktionalen Bauteil des Filters gebildet. So dient als elektrischer Kontakt zum Ableiten von statischer Ladung von dem Filterelement erfindungsgemäß ein Druckregler, ein Drucksensor oder ein Füllstandsanzeiger. Dem entsprechenden funktionellen Bauteil kommt somit eine Doppelfunktion zu, es führt einerseits seine ursprüngliche Funktion aus und dient zusätzlich als elektrischer Kontakt zur Ableitung von Ladung. Auf einen separaten, beispielsweise als Metallstift ausgebildeten Kontaktstift kann gemäß der Erfindung mit Vorteil verzichtet werden. Weiterhin wird durch diese Ausgestaltungsvariante die Anzahl der benötigten Kabel reduziert.

In Ausgestaltung der Erfindung ist vorgesehen, dass die Endscheibe von einem Gehäusedeckel gebildet ist, welcher lösbar oder unlösbar mit einer Umfangswand des Gehäuses verbunden ist. Die Ausbildung der Endscheibe als Gehäusedeckel hat den Vorteil, dass das Filterelement in einem ersten Arbeitsschritt in den Gehäusedeckel, beispielsweise durch partielles Aufschmelzen des Gehäusedeckels, eingebettet werden kann. Daraufhin kann die Einheit bestehend aus Gehäusedeckel und Filterelement in einem zweiten Arbeitsschritt mit dem restlichen Gehäuse verbunden werden.

Mit Vorteil ist der Gehäusedeckel lösbar mit dem restlichen Gehäuse verbunden, so dass das Filterelement zusammen mit dem Gehäusedeckel ausgetauscht werden kann.

Es ist zweckmäßig, die Leitfähigkeit des Kunststoffes durch Dotierung mit elektrisch leitenden Materialien, insbesondere mit Carbonfasern, zu erzielen. Durch die Dotierung mit elektrisch leitenden Materialien können Kunststoffe, wie beispielsweise Azetal, Nylon oder Polyethylen leitend ausgebildet werden. Die Menge der zugesetzten elektrisch leitfähigen Materialien ist proportional zur Leitfähigkeit des Endproduktes.

Es ist zweckmäßig, wenn als Filterelement ein zickzackförmiges, vorzugsweise zylindrisches, Filterelement verwendet wird. Dabei strömt das zu filtrierende Medium in der Regel radial von außen durch das zickzackförmige Filterelement zu einem zentrisch angeordneten Ablaufkanal. Durch die zickzackförmige Ausbildung des Filterelements wird die wirksame Filteroberfäche vergrößert. Das Filterelement besteht im Wesentlichen aus einem Filterpapier oder einem Filtervlies, wobei in der Regel eine starre Stützstruktur, insbesondere aus Kunststoff, vorgesehen ist.

Gemäß einer Weiterbildung der Erfindung ist vorgesehen, dass das Filterelement zwei Endscheiben aufweist, und dass beide Endscheiben durch ein Gehäuseteil, insbesondere jeweils durch einen Gehäusedeckel, gebildet sind. Dabei ist es denkbar, beide Endscheiben aus elektrisch leitfähigem Kunststoff auszubilden und an jeder Endscheibe einen elektrischen Kontakt zur Ableitung von Ladung anzubringen.

In Ausgestaltung der Erfindung ist vorgesehen, dass das Gehäuse zwei beabstandete Gehäusedeckel und eine diese Gehäusedeckel miteinander verbindende Umfangswand aufweist und dass die beiden Deckel, vorzugsweise über die Umfangswand, elektrisch leitend miteinander verbunden sind. Gemäß dieser Ausgestaltung der Erfindung muss an dem gesamten Gehäuse nur ein einziger Kontakt vorgesehen werden, über den nicht nur die Ladung des Filterelements, sondern auch die Ladung des Gehäuses abgeführt werden kann.

Bevorzugt sind die Mehrzahl der Gehäusebauteile, vorzugsweise sämtliche Gehäusebauteile, aus elektrisch leitendem Kunststoff ausgebildet. Hierdurch kann das Gesamtgewicht des Filters bei gleichzeitiger optimaler Ladungsabführung reduziert werden.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht eines Filters,
- Fig. 2: eine geschnittene Ansicht des Filters gemäß Fig. 1,
- Fig. 3: eine gegenüber Fig. 2 gedrehte, geschnittene Ansicht des Filters gemäß Fig. 1 und
- Fig. 4: eine alternative Ausführungsform eines Filters in geschnittener Darstellung.

### Ausführungsform(en) der Erfindung

In den Figuren sind gleiche Bauteile und Bauteile mit gleicher Funktion mit den gleichen Bezugszeichen gekennzeichnet.

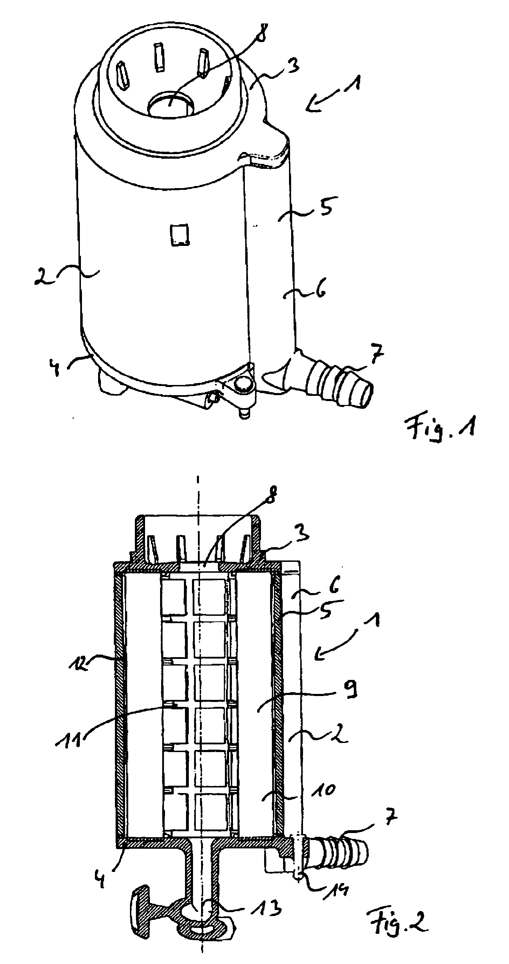

In Fig. 1 ist der Filter 1 in einer perspektivischen Ansicht gezeigt. Zu erkennen ist das im Wesentlichen kreiszylinderförmige Gehäuse 2 mit zwei voneinander beabstandeten Gehäusedeckeln 3, 4. Die beiden Gehäusedeckel 3, 4 sind über eine Umfangswand 5 miteinander verbunden. In eine Auswölbung 6 der Umfangswand mündet eine Zufuhrleitung 7 für Kraftstoff. Der Kraftstoff verlässt den Filter 1 über eine zentrische Öffnung 8 innerhalb des in der Zeichnungsebene oberen Gehäusedeckels 3.

In Fig. 2 ist der Filter 1 geschnitten dargestellt. Zu erkennen ist das innerhalb des Gehäuses 2 angeordnete Filterelement 9. Das Filterelement 9 besteht aus einen gefalteten, hohlzylindrischen Filterpapier 10, welches von einer zentrischen Kunststoffstützstruktur 11 stabilisiert und gehalten ist. Innerhalb der Stützstruktur 11 ist ein zentrisch innerhalb des Gehäuses 2 angeordneter Flüssigkeitskanal gebildet, welcher mit der Abflussöffnung 8 im Gehäusedeckel 3 kommunizierend verbunden ist, so dass Kraftstoff durch die Zufuhröffnung 7 in einen Ringraum 12 radial außerhalb des Filterpapiers 10 fließen kann und von dort radial nach innen durch das Filterpapier 10 zu dem von der Stützstruktur 11 umschlossenen Kanal und von dort aus durch die Öffnung 8 aus dem Gehäuse 2 hinaus strömen kann. Ein Teil des Kraftstoffes kann durch einen in der Zeichnungsebene unten angeordneten Abflusskanal 13 zurück in den Tankraum des Kraftfahrzeuges fließen.

Beide Gehäusedeckel 3, 4 bilden Endscheiben für das zickzackförmige Filterelement und sind mit dem Filterpapier 10 des Filterelements flüssigkeitsdicht verbunden, so dass keine Flüssigkeit zwischen dem Filterpapier und der Endscheibe passieren kann. Genauer ausgedrückt ist das Filterelement 9, bzw. das Filterpapier 10 in beide Gehäusedeckel 3, 4 eingebettet. Montagetechnisch erfolgt dies beispielsweise durch partielles Aufschmelzen der Gehäusedeckel im Kontaktbereich. Beide Gehäusedeckel 3, 4 sind aus elektrisch leitendem, mit Carbonfasern dotiertem Kunststoff ausgebildet. Auch die Umfangswand 5 ist aus diesem elektrisch leitenden Material gebildet. Außerhalb der Umfangswand 5 ist in den elektrisch leitenden Gehäusedeckel 4 ein elektrischer Kontaktstift 14 eingebracht. Dieser kann beispielsweise mit der Fahrzeugkarosserie verbunden werden. Über die als Gehäusedeckel 4 ausgebildete Endscheibe und den Kontaktstift 14 kann Ladung von dem Filterelement 9 abgeführt werden. Da sowohl der obere Gehäusedeckel 3 als auch die Umfangswand 5 aus elektrisch leitendem Kunststoff ausgebildet sind, kann über den Kontaktstift 14 das gesamte Gehäuse 2 des Filters 1 geerdet werden. Zusätzliche Kontaktanschlüsse sind nicht notwendig.

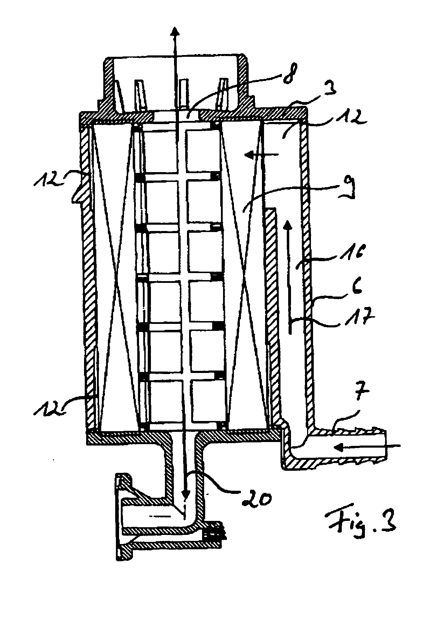

In Fig. 3 ist der Fluss des Kraftstoffes durch Pfeile verdeutlicht. Der Kraftstoff fließt durch die Zuführleitung 7 (Pfeil 15) und durch einen innerhalb der Auswölbung 6 gebildeten Strömungskanal 16 (Pfeil 17) in den das Filterelement 9 umgebenden Ringraum 12. Von dort durchströmt es das Filterelement 9 (Pfeil 18) und gelangt in den von dem Filterelement 9 umschlossenen Kanal. Von dort aus fließt ein Teil des Fluids durch die Öffnung 8 im Gehäusedeckel 3 ab in Richtung Motor (Pfeil 19). Ein anderer Teil des Kraftstoffes fließt in entgegengesetzte Richtung zurück zum Kraftfahrzeugtank (Pfeil 20).

Der Kontaktstift 14 ist in der Darstellung gemäß Fig. 3 aufgrund der Schnittlage nicht dargestellt. Anstelle des Kontaktstiftes 14, welcher elektrisch leitend mit dem als Endscheibe ausgebildeten Gehäusedeckel 4 verbunden ist, können auch funktionelle Bauteile des Filters 1 zur Ableitung von Ladung genutzt werden.

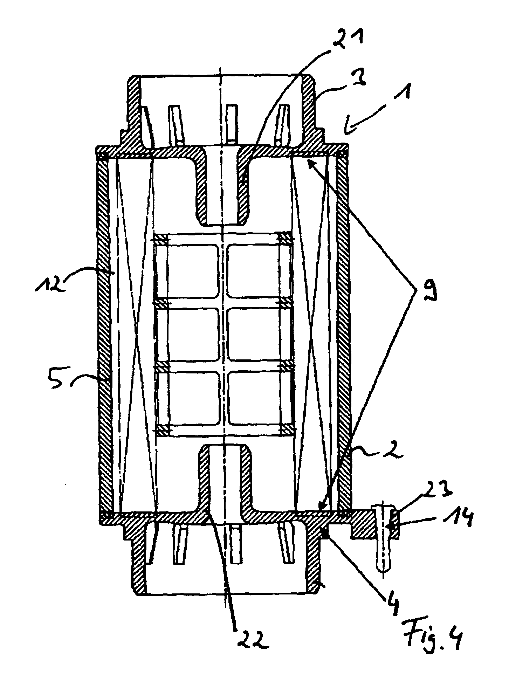

In Fig. 4 ist eine alternative Ausgestaltung eines Filters 1 gezeigt. Bei der dargestellten Ausführungsform weisen die aus elektrisch leitendem Kunststoff gebildeten Gehäusedeckel 3, 4 in das Gehäuseinnere weisende Stutzen 21,22 auf, die in den Kanal innerhalb des Filterelements 9 hineinragen. Die Zuflussleitung zu dem Ringraum 12 innerhalb des Gehäuses 2 ist nicht gezeigt. Über den in der Zeichnungsebene oberen Stutzen 21 verlässt der Kraftstoff den Filter 1 in Richtung Motor. Über den in der Zeichnungsebene unteren Stutzen 22 gelangt der Kraftstoff zurück in den Kraftfahrzeugtank. Auch bei dem gezeigten Ausführungsbeispiel bilden die Gehäusedeckel 3, 4 Endscheiben für das Filterelement 9. Der Gehäusedeckel 4 ist mit einem metallischen Kontaktstift 14 versehen, welcher in einer Öffnung 23 des Gehäusedeckels 4 gehalten ist.

## Patentansprüche

1. Filter (1), insbesondere zur Filterung von Kraftstoff, mit einem in einem Gehäuse (2) angeordneten Filterelement (9) mit mindestens einer Endscheibe (3, 4), die von einem Abschnitt des Gehäuses (2) gebildet ist, wobei das Filterelement (9) mit der Endscheibe (3, 4) verbunden ist, **dadurch gekennzeichnet, dass** die Endscheibe (3, 4) aus einem elektrisch leitenden Kunststoff besteht und dass am Gehäuse (2), vorzugsweise an der Endscheibe (3, 4), ein elektrischer Kontakt (14) zum Ableiten von elektrischer Ladung von dem Filterelement vorgesehen ist, wobei der elektrische Kontakt (14) als Druckregler, Drucksensor, oder Füllstandanzeiger ausgebildet ist.

2. Filter nach Anspruch 1, **dadurch gekennzeichnet, dass** die Endscheibe (3, 4) von einem Gehäusedeckel (3, 4) gebildet ist, der lösbar oder unlösbar mit einer Umfangswand (5) des Gehäuses (2) verbunden ist.

3. Filter nach einem der vorhergehenden Ansprüche, **dadurch gekennzeichnet, dass** die Leitfähigkeit des Kunststoffes durch Dotierung mit elektrisch leitenden Materialien, insbesondere mit Carbonfasern, erreicht ist.

4. Filter nach einem der vorhergehenden Ansprüche, **dadurch gekennzeichnet, dass** das Filterelement (9) Filtervlies und/oder Filterpapier umfasst.

5. Filter nach einem der vorhergehenden Ansprüche, **dadurch gekennzeichnet, dass** das Filterelement (9) zickzackförmig und vorzugsweise zylindrisch ausgebildet ist.

6. Filter nach einem der vorhergehenden Ansprüche, **dadurch gekennzeichnet, dass** das Filterelement (9) zwei Endscheiben (3, 4) aufweist, und dass beide Endscheiben (3, 4) durch je ein Gehäuseteil, insbesondere jeweils durch einen Gehäusedeckel (3, 4), gebildet sind.

7. Filter nach einem der vorhergehenden Ansprüche, **dadurch gekennzeichnet, dass** das Gehäuse (2) zwei beabstandete Gehäusedeckel (3, 4) und eine diese Gehäusedeckel (3, 4) miteinander verbindende Umfangswand (5) aufweist, und die beiden Gehäusedeckel (3, 4), vorzugsweise über die Umfangswand (5), elektrisch leitend miteinander verbunden sind.

8. Filter nach einem der vorhergehenden Ansprüche, **dadurch gekennzeichnet, dass** das Gehäuse (2) zu mehr als 50%, vorzugsweise vollständig, aus elektrisch leitendem Kunststoff ausgebildet ist.

## Claims

1. Filter (1), in particular for filtering fuel, with a filter element (9) disposed in a housing (2) with at least one end plate (3, 4) which is formed by a section of the housing (2), the filter element (9) being connected with the end plate (3, 4), **characterized in that** the end plate (3, 4) consists of an electrically conductive synthetic material and that an electrical contact (14) for discharging electrical charge from the filter element is provided at the housing (2), preferably at the end plate (3, 4), the electrical contact (14) being designed as pressure controller, pressure sensor or level indicator.

2. Filter according to claim 1, **characterized in that** the end plate (3, 4) consists of a housing cover (3, 4) which is connected detachably or undetachably with a peripheral wall (5) of the housing (2).

3. Filter according to one of the above claims, **characterized in that** the conductivity of the synthetic material is reached by doping with electrically conductive materials, in particular with carbon fibers.

4. Filter according to one of the above claims, **characterized in that** the filter element (9) comprises filter fleece and/or filter paper.

5. Filter according to one of the above claims, **characterized in that** the filter element (9) has a fanfold and preferably cylindrical design.

6. Filter according to one of the above claims, **characterized in that** the filter element (9) features two end plates (3, 4), and that both end plates (3, 4) consists each of a housing component, in particular of a housing cover (3, 4) each.

7. Filter according to one of the above claims, **characterized in that** the housing (2) features two spaced housing covers (3, 4) and a peripheral wall (5) connecting these housing covers (3, 4) with each other, and that the two housing covers (3, 4) are connected, preferably via the peripheral wall (5), in an electrically conductive manner with each other.

8. Filter according to one of the above claims, **characterized in that** the housing (2) is made in more than 50%, preferably completely, of electrically conductive synthetic material.

## Revendications

1. Filtre (1), notamment pour le filtrage de carburant, avec un élément filtrant (9) disposé dans un boîtier (2), avec au moins un disque d'extrémité (3, 4) formé par une section du boîtier (2), l'élément filtrant (9) étant relié avec le disque d'extrémité (3, 4), **caractérisé en ce que** le disque d'extrémité (3, 4) est composé d'une matière plastique électroconductrice et qu'un contact électrique (14) destiné à dériver la charge électrique de l'élément filtrant est prévu sur le boîtier (2), de préférence sur le disque d'extrémité (3, 4), le contact électrique (14) étant réalisé en tant que régulateur de pression, capteur de pression ou jauge de niveau.

2. Filtre selon la revendication 1, **caractérisé en ce que** le disque d'extrémité (3, 4) est formé par un couvercle de boîtier (3, 4) qui est relié de manière amovible ou fixe à une paroi circonférentielle (5) du boîtier (2).

3. Filtre selon l'une des revendications précédentes, **caractérisé en ce que** la conductivité de la matière plastique est obtenue par dopage avec des matériaux électroconducteurs, notamment avec des fibres de carbone.

4. Filtre selon l'une des revendications précédentes, **caractérisé en ce que** l'élément filtrant (9) comprend du non-tissé filtrant et/ou du papier filtre.

5. Filtre selon l'une des revendications précédentes, **caractérisé en ce que** l'élément filtrant (9) est réalisé en forme d'accordéon et est de préférence cylindrique.

6. Filtre selon l'une des revendications précédentes, **caractérisé en ce que** l'élément filtrant (9) comprend deux disques d'extrémité (3, 4) et que les deux disques d'extrémité (3, 4) sont formés par respectivement une partie du boîtier, notamment respectivement par un couvercle de boîtier (3, 4).

7. Filtre selon l'une des revendications précédentes, **caractérisé en ce que** le boîtier (2) présente deux couvercles de boîtier (3, 4) espacés et une paroi circonférentielle (5) reliant l'un à l'autre ces couvercles de boîtier (3, 4), et que les deux couvercles de boîtier (3, 4) sont reliés l'un à l'autre de manière électroconductrice, de préférence par l'intermédiaire de la paroi circonférentielle (5).

8. Filtre selon l'une des revendications précédentes, **caractérisé en ce que** le boîtier (2) est composé à plus de 50 %, de préférence entièrement, d'une matière plastique électroconductrice.
